# EUROPÄISCHE PATENTSCHRIFT

(11) **EP 0 832 388 B1**
(45) Veröffentlichungstag und Bekanntmachung des Hinweises auf die Patenterteilung: **04.10.2000**
(21) Anmeldenummer: 96946227.4
(22) Anmeldetag: 20.12.1996
(51) Int. Cl.: F16K 17/38

(54) **SICHERHEITSVENTIL FÜR EINE ROHRLEITUNG**
PIPELINE SAFETY VALVE VALVE
VANNE DE SECURITE POUR CANALISATION

(30) Priorität: 01.03.1996 DE 19607840
(43) Veröffentlichungstag der Anmeldung: 01.04.1998
(73) Patentinhaber: Hermann-Heinz-Burger, Gas- und Wasserarmaturen GmbH, 58239 Schwerte (DE)
(72) Erfinder: BERG, Peter, D-58239 Schwerte (DE)
(74) Vertreter: Dörner, Lothar, Dipl.-Ing.
(86) Internationale Anmeldenummer: DE9602496
(87) Internationale Veröffentlichungsnummer: WO9732148

(56) Entgegenhaltungen:
- DE-C- 3 700 473
- FR-A- 2 323 082
- US-A- 1 502 466
- US-A- 3 464 433
- US-A- 3 473 544
- US-A- 3 981 316
- US-A- 4 969 482

## Beschreibung

Die Erfindung betrifft ein Sicherheitsventil für eine Rohrleitung, insbesondere für eine Gasleitung im Bereich eines Hausanschlusses, das ein im Verlauf der Rohrleitung anzuordnendes Gehäuse, ein in dem Gehäuse vorgesehenes Absperrorgan, einen an dem Gehäuse unter einem Winkel zu seiner Längsachse befestigten, von außen zugänglichen Stutzen und einen in dem Stutzen gehaltenen, flexibel mit dem Absperrorgan verbundenen sowie mit einem Temperaturfühler versehenen Auslösemechanismus aufweist, von dem bei Raumtemperatur entgegen der Wirkung einer Druckfeder das Absperrorgan in Offenstellung gehalten ist.

An Sicherheitsventile, die in dem Bereich eines Hausanschlusses einer Gasleitung zum Einsatz kommen, werden hohe Anforderungen gestellt. So müssen solche Ventile beispielsweise auch bei durch Feuereinwirkung bedingten hohen Temperaturen so lange dicht bleiben, daß die nach den DVGW-Richtlinien zugelassenen Leckgasmengen nicht überschritten werden.

Ein Sicherheitsventil der eingangs genannten Art ist aus US-PS 39 81 316 bekannt. Bei dem bekannten Ventil wird - wie es auch sonst üblich ist (vgl. DE-PS 37 00 473) - das Absperrorgan mittels einer bei einer gewünschten Temperatur ansprechenden Schmelzsicherung gegen die Wirkung der Druckfeder offengehalten und nach Ansprechen der Schmelzsicherung das Absperrorgan mittels der sich entspannenden Druckfeder geschlossen. Bei so aufgebauten Ventilen gestaltet sich nach Wegschmelzen der alten Schmelzsicherung das Einsetzen einer neuen schwierig: Es müssen die mit der Schmelzsicherung zu verbindenden Teile des Auslösemechanismus gegen die Wirkung der Druckfeder zusammengeführt und die Schmelzsicherung eingebracht werden.

Hier will die Erfindung Abhilfe schaffen. Der Erfindung liegt die Aufgabe zugrunde, ein Sicherheitsventil zu schaffen, dessen Auslösemechanismus vereinfacht zu warten ist, bei dem insbesondere im Bedarfsfall die Schmelzsicherung einfach einzusetzen/auszutauschen ist. Gemäß der Erfindung wird diese Aufgabe dadurch gelöst, daß zwischen einem Teller des Absperrorgans und einem Stegring, der in einer Aufnahme des Gehäuses vorgesehen ist, eine Druckfeder angeordnet ist, derem Federkraft geringer ist als die Federkraft der Druckfeder des Auslösemechanismus. Bei der Erfindung bleibt der Auslösemechanismus auch nach Auslösen des Temperaturfühlers/der Schmelzsicherung eine Einheit. Es braucht lediglich der Teller des Auslösemechanismus in Wirkungsrichtung des Absperrorgans geschoben und mit einem neuem Temperaturfühler/einer neuen Schmelzsicherung belegt und abgestützt zu werden. Dabei fährt das Absperrorgan automatisch unter der Wirkung der ihm zugeordneten Druckfeder in die Offenstellung. Bei der Erfindung ist also nach einem Auslösens des Ventils durch einfaches Einsetzen des Auslösemechanismus das Ventil wieder betriebsbereit zu machen. Der Auslösemechanismus ist von außen zugänglich, was die Wartung erleichtert.

Ausgestaltungen und Weiterbildungen der Erfindung sind in den Unteransprüchen beschrieben. Ein Ausführungsbeispiel der Erfindung ist in der Zeichnung dargestellt und wird im folgenden näher beschrieben. Es zeigen:
- Fig. 1: in schematischer Darstellung einen Längsschnitt durch ein Sicherheitsventil in geöffnetem Zustand;
- Fig. 2: das in Fig. 1 dargestellte Sicherheitsventil in geschlossenem Zustand;.
- Fig. 3: das Gehäuse des Sicherheitsventils im Längsschnitt;
- Fig. 4: den Zentrierstern des Sicherheitsventils in einer Stirnansicht und in einem Schnitt A-A;
- Fig. 5: Das Auslösergehäuse des Sicherheitsventils im Längsschnitt 2:1 vergrößert.

Um Versorgungsleitungen von außen in das Innere eines Gebäudes einführen zu können, sind in der Mauer Durchbrüche vorzusehen. Sicherheitsventile der hier betrachteten Art kommen im Bereich dieser Mauerdurchführungen zum Einsatz.

Das als Ausführungsbeispiel gewählte Sicherheitsventil weist ein rohrartiges Gehäuse 1 auf. In das Gehäuse 1 ist in Axialrichtung ein Absperrorgan 2 eingesetzt. Das Absperrorgan 2 ist mit einem Auslösemechanismus 3 verbunden, der unter einem Winkel an der Außenseite des Gehäuses 1 angeordnet ist. Das Absperrorgan 2 und der Auslösemechanismus 3 sind flexibel über eine Kette 4 miteinander verbunden.

Das Gehäuse 1 weist einen Eintritt 11 sowie einen Austritt 12 auf. In montiertem Zustand wird das Sicherheitsventil vom Eintritt 11 in Richtung des Austritts 12 durchströmt. Im Anschluß an den Eintritt 11 weist das Gehäuse auf seiner Innenseite eine Kammer 13 auf, deren Durchmesser größer ist als der Durchmesser des Eintritts 11. Auf der dem Eintritt 11 abgewandten Seite der Kammer 13 ist eine Verjüngung vorgesehen, die in einem Ventilsitz 14 endet. Im Anschluß an den Ventilsitz 14 ist eine Aufnahme 15 vorgesehen, deren Querschnitt geringer ist als der des Ventilsitzes 14. Auf der dem Austritt 12 zugewandten Seite schließt sich an die Aufnahme 15 ein Auslauf 16 an, dessen Querschnitt geringer ist, als der der Aufnahme 15.

An das Gehäuse 1 ist bezogen auf den Ventilsitz 14 in Richtung des Austritts 12 versetzt unter einem Winkel zur Längsachse des Sicherheitsventils ein als Hohlzylinder ausgebildeter Stutzen 17 angeformt. Im Ausführungsbeispiel beträgt dieser Winkel etwa 45°. Der Stutzen 17 ist mit einem Innengewinde versehen. Der Stutzen 17 weist an seinem Boden 18 in der Mitte eine Bohrung 19 auf, die in dem Auslauf 16 endet. Die Bohrung 19 trifft in dem gleichen Winkel auf den Auslauf 16, unter dem der Stutzen 17 an das Gehäuse 1 angeformt ist.

Das Absperrorgan 2 weist einen Stegring 21 auf, der in die Aufnahme 15 des Gehäuses 1 eingesetzt ist. Der Stegring 21 ist in seiner Mitte von einer Bohrung 22 durchsetzt. Die Bohrung 22 ist auf der dem Ventilsitz 14 abgewandten Seite trompetenförmig geöffnet. In der Bohrung 22 ist ein Stift 23 geführt, an dessen dem Eintritt 11 zugewandten Ende ein Teller 24 befestigt ist. Der Teller 24 weist den gleichen Durchmesser auf wie der Ventilsitz 14 des Gehäuses 1. Zwischen dem Stegring 21 und dem Teller 24 ist eine den Stift 23 umgreifende Spiralfeder 25 angeordnet.

Der Auslösemechanismus 3 ist an der Außenseite des Gehäuses 1 in dem Stutzen 17 befestigt. Hierzu ist eine mit einem Außengewinde versehene Buchse 31 in den Stutzen 17 eingeschraubt. Die Buchse 31 ist hohl ausgeführt und einseitig geschlossen. Die offene Seite der Buchse 31 ist in eingeschraubtem Zustand dem Boden 18 des Stutzens 17 zugewandt. Die Buchse 31 weist auf ihrer Innenseite eine Verjüngung 32 auf. An der Verjüngung 32 stützt sich bei Raumtemperatur ein Temperaturfühler 33 ab, der die Form einer kreisförmigen flachen Scheibe hat. Der Temperaturfühler 33 hat den gleichen Durchmesser, wie die Innenseite der Buchse 31 in ihrem dem Boden 18 des Stutzens 17 zugewandten Bereich. Im Ausführungsbeispiel besteht der Temperaturfühler 33 aus einem Wärmeplättchen, das bei Raumtemperatur fest, bei erhöhter Temperatur weich bis flüssig wird. Auf der dem Boden 18 zugewandten Seite liegt an dem Temperaturfühler 33 ein Teller 34 an, dessen Durchmesser kleiner als der Durchmesser der Verjüngung 32 ist. Auf der dem Boden 18 zugewandten Seite ist an dem Teller 34 in der Mitte ein Stift 35 angebracht, der in der Durchtrittsbohrung 19 geführt Zwischen dem Teller 34 des Auslösemechanismus 3 und dem Boden 18 des Gehäuses 1 ist eine Druckfeder 36 angeordnet, die den Stift 35 umschließt. Die Kraft der Feder 36 ist größer als die der Feder 25.

An seinem dem Teller 34 abgewandten Ende des Stiftes 35 ist die Kette 4 befestigt. Die Kette 4 verbindet den Auslösemechanismus 3 mit dem Absperrorgan 2. Auf der Seite des Absperrorgans 2 ist die Kette an dem dem Teller 24 abgewandten Ende des Stiftes 23 befestigt.

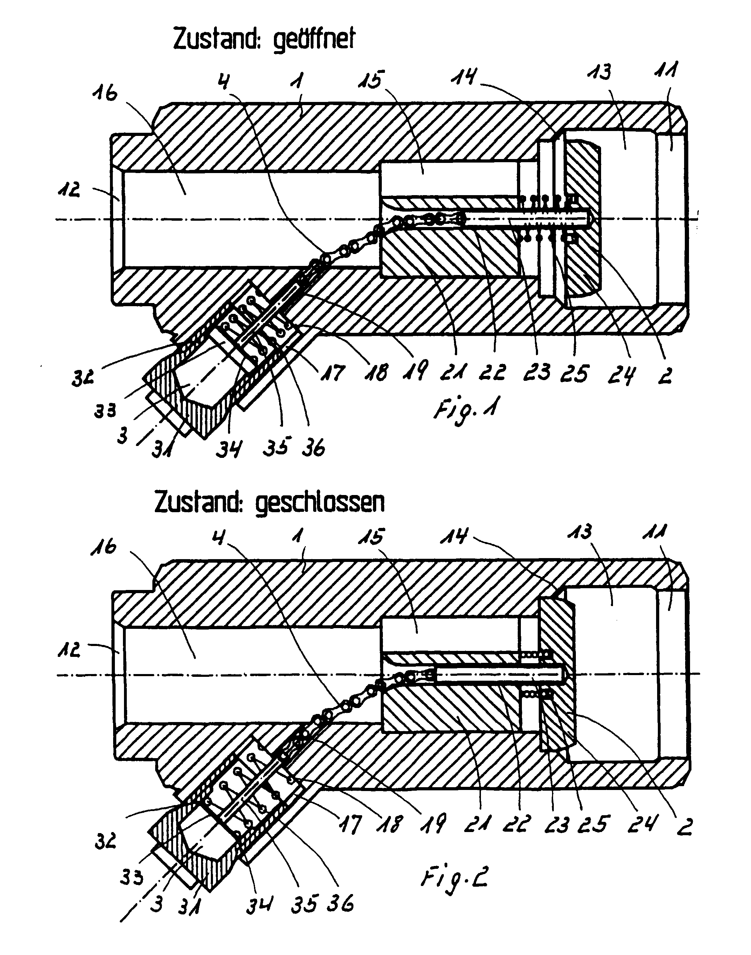

Im folgenden ist die Funktionsweise des erfindungsgemäßen Sicherheitsventils beschrieben: In geöffnetem Zustand des Sicherheitsventils liegt der Temperaturfühler 33 einerseits auf dem Teller 34 und stützt sich andererseits gegen die Wirkung der Druckfeder 36 an der Verjüngung 32 ab. Durch Einschrauben der Buchse 31 in den Stutzen 17 wird das Ventil vorgespannt, indem die Druckfeder 36 beim Einschrauben zusammengedrückt wird, wodurch die Druckfeder 25 des Absperrorgans 2, deren Federkraft geringer als die der Feder 36 ist, den Teller 24 aus dem Ventilsitz 14 herausdrückt. Das Ventil ist in diesem Zustand geöffnet - Fig. 1 -.

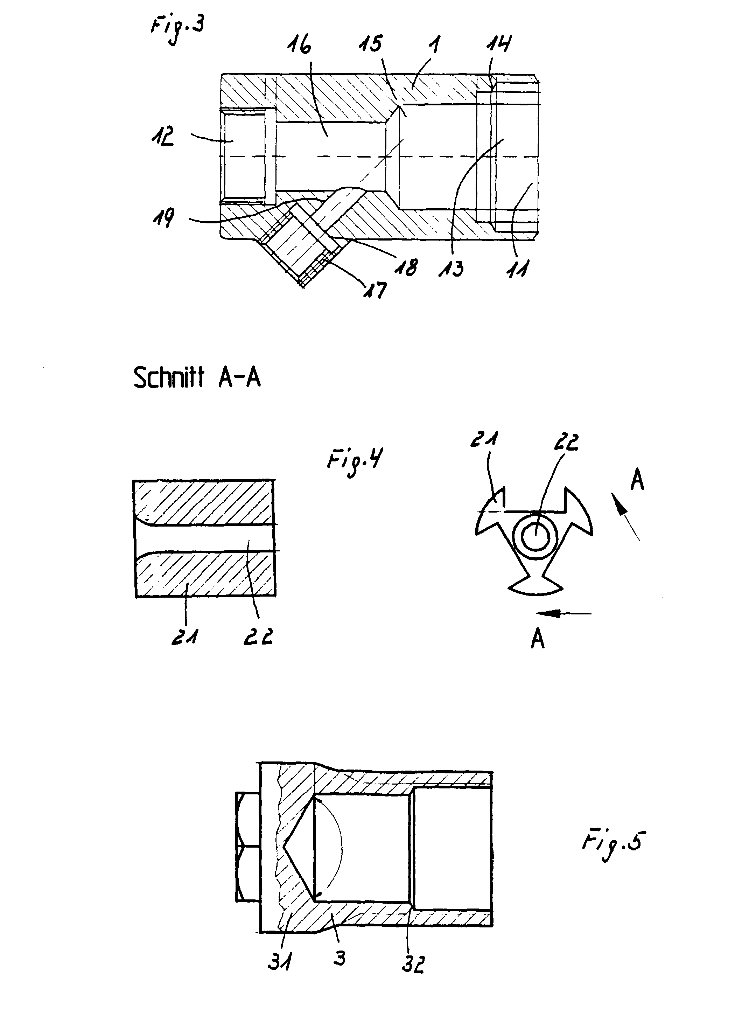

Steigt nun die Temperatur z.B. unter Feuereinwirkung über den durch die Auswahl des Temperaturfühlers 33 gewählten Wert an, wird der Temperaturfühler weich bis flüssig, wodurch das Abstützen gegen die Verjüngung 32 aufgehoben wird; der Teller 34 wird unter der Wirkung der Feder 36 von dem Boden 18 des Stutzens 17 weggedrückt. Diese Bewegung wird vom Teller 34 über den Stift 35 auf die Kette 4 übertragen, die ihrerseits die Bewegung auf den Stift 23 des Absperrorgans 2 überträgt, was zu einer Bewegung des Stiftes 23 in Richtung des Austritts 12 führt. Dadurch bedingt bewegt sich der Teller 24 gegen die Wirkung der Druckfeder 25 ebenfalls in Richtung des Austritts 12, bis er in dem Ventilsitz 14 seine Schließposition eingenommen hat. Das Ventil ist dann geschlossen - Fig. 2 -.

## Patentansprüche

1. Sicherheitsventil für eine Rohrleitung, insbesondere für eine Gasleitung im Bereich eines Hausanschlusses, das ein im Verlauf der Rohrleitung anzuordnendes Gehäuse (1), ein in dem Gehäuse vorgesehenes Absperrorgan (2), einen an das Gehäuse unter einem Winkel zu seiner Längsachse befestigten, von außen zugänglichen Stutzen (17) und einen in dem Stutzen gehaltenen, flexibel mit Absperrorgan verbundenen sowie mit einem Temperaturfühler (33) versehenen Auslösemechanismus (3) aufweist, von dem bei Raumtemperatur entgegen der Wirkung einer Druckfeder (36) das Absperrorgan in Offenstellung gehalten ist, dadurch gekennzeichnet, daß zwischen einem Teller (24) des Absperrorgans (2) und einem Stegring (21), der in einer Aufnahme (15) des Gehäuses (1) vorgesehen ist, eine Druckfeder (25) angeordnet ist, deren Federkraft geringer ist als die Federkraft der Druckfeder (36) des Auslösemechanismus (3).

2. Sicherheitsventil nach Anspruch 1, dadurch gekennzeichnet, daß das Absperrorgan (2) und der Auslösemechanismus (3) durch eine Kette (4) miteinander verbunden sind.

3. Sicherheitsventil nach Anspruch 1 oder 2, dadurch gekennzeichnet, daß der den Auslösemechanismus (3) aufnehmende Stutzen (17) an seinem Boden (18) eine Durchtrittsbohrung (19) in einen Auslauf (16) des Gehäuses (1) aufweist.

4. Sicherheitsventil nach Anspruch 3, dadurch gekennzeichnet, daß in den Stutzen (17) eine mit einem Außengewinde versehene Buchse (31) eingeschraubt ist, die auf ihrer Innenseite eine Verjüngung (32) aufweist, an der der Temperaturfühler (33) bei Raumtemperatur entgegen der Wirkung der Druckfeder (36) abgestützt ist.

5. Sicherheitsventil nach Anspruch 4, dadurch gekennzeichnet, daß der Temperaturfühler (33) auf der der Verjüngung (32) abgewandten Seite an einem Teller (34) befestigt ist, dessen Durchmesser kleiner als der Durchmesser der Verjüngung (32) ist.

6. Sicherheitsventil nach den Ansprüchen 5 und 2, dadurch gekennzeichnet, daß auf der dem Temperaturfühler (33) abgewandten Seite des Tellers (34) ein Stift (35) angebracht ist, der bei geöffnetem Zustand des Ventils in der Durchtrittsbohrung (19) des Gehäuses (1) geführt ist, und an dessen dem Teller (34) abgewandten Ende die Kette (4) befestigt ist.

7. Sicherheitsventil nach Anspruch 6, dadurch gekennzeichnet, daß an dem Teller (24) des Absperrorgans (2) auf der dem Auslösemechanismus (3) zugewandten Seite ein Stift (23) angebracht ist, der in dem Stegring (21) geführt ist, und daß an dem dem Teller (24) abgewandten Ende des Stiftes (23) die Kette (4) befestigt ist.

## Claims

1. Safety valve for a pipe conduit, in particular for a gas conduit in the region of a house connection, which valve has a housing (1) which is to be disposed in the run of the pipe conduit, a shut-off device (2) provided in the said housing, a connecting piece (17) which is fastened to the housing at an angle to the longitudinal axis of the latter and is accessible from outside, and a triggering mechanism (3) which is held in the connecting piece, is flexibly connected to the shut-off device and is provided with a temperature probe (33) and by which, at room temperature, the said shut-off device is held in the open position against the action of a compression spring (36), characterised in that a compression spring (25), the spring force of which is lower than the spring force of the compression spring (36) of the triggering mechanism (3), is disposed between a plate (24) on the shut-off device (2) and a webbed ring (21) which is provided in a receptacle (15) in the housing (1).

2. Safety valve according to claim 1, characterised in that the shut-off device (2) and the triggering mechanism (3) are connected to one another by a chain (4).

3. Safety valve according to claim 1 or 2, characterised in that the connecting piece (17) receiving the triggering mechanism (3) has, at its base (18), a pass-through bore (19) into an outlet (16) in the housing (1).

4. Safety valve according to claim 3, characterised in that a bush (31), which is provided with an external thread and has, on its inner side, a tapered portion (32) against which, at room temperature, the temperature probe (33) is supported against the action of the compression spring (36), is screwed into the connecting piece (17).

5. Safety valve according to claim 4, characterised in that the temperature probe (33) is fastened, on the side which faces away from the tapered portion (32), to a plate (34), the diameter of which is smaller than the diameter of the said tapered portion (32).

6. Safety valve according to claims 5 and 2, characterised in that a pin (35), which is guided in the pass-through bore (19) in the housing (1) when the valve is in the open condition, and to whose end which faces away from the plate (34) the chain (4) is fastened, is attached on that side of the said plate (34) which faces away from the temperature probe (33).

7. Safety valve according to claim 6, characterised in that a pin (23), which is guided in the webbed ring (21), is attached to the plate (24) of the shut-off device (2) on that side which faces towards the triggering mechanism (3), and that the chain (4) is fastened to that end of the pin (23) which faces away from the said plate (24).

## Revendications

1. Soupape de sûreté pour une canalisation, en particulier pour une conduite de gaz dans la zone d'un branchement, qui présente un corps (1) placé dans le cours de la canalisation, un organe d'arrêt (2) prévu dans ce corps, une tubulure (17) fixée au corps sous un angle par rapport à l'axe longitudinal de celui-ci et accessible de l'extérieur, et un mécanisme de déclenchement (3) monté dans la tubulure, relié de manière flexible à l'organe d'arrêt, pourvu d'un capteur de température (33), et qui, à la température ambiante, maintient l'organe d'arrêt en position ouverte contre l'action d'un ressort de compression (36), caractérisée par le fait qu'entre un plateau (24) de l'organe d'arrêt (2) et une bague nervurée (21) prévue dans un logement (15) du corps (1) est placé un ressort de compression (25) dont la force est inférieure à celle du ressort de compression (36) du mécanisme de déclenchement (3).

2. Soupape de sûreté selon la revendication 1, caractérisée par le fait que l'organe d'arrêt (2) et le mécanisme de déclenchement (3) sont reliés par une chaîne (4).

3. Soupape de sûreté selon l'une des revendications 1 et 2, caractérisée par le fait que la tubulure (17) qui reçoit le mécanisme de déclenchement (3) présente à son fond (18) un trou de passage (19) qui débouche dans un conduit d'écoulement (16) du corps (1).

4. Soupape de sûreté selon la revendication 3, caractérisée par le fait que dans la tubulure (17) est vissée une douille (31) pourvue d'un filetage extérieur et qui présente sur sa face intérieure un rétrécissement (32) sur lequel, à la température ambiante, le capteur de température (33) est appuyé contre l'action du ressort de compression (36).

5. Soupape de sûreté selon la revendication 4, caractérisée par le fait que le capteur de température (33) est fixé sur le côté opposé au rétrécissement (32) à un plateau (34) dont le diamètre est inférieur au diamètre du rétrécissement (32).

6. Soupape de sûreté selon les revendications 5 et 2, caractérisée par le fait que sur le côté du plateau (34) opposé au capteur de température (33) est montée une tige (35) qui, lorsque la soupape est ouverte, est guidée dans le trou de passage (19) du corps (1) et à l'extrémité opposée au plateau (34) de laquelle la chaîne (4) est fixée.

7. Soupape de sûreté selon la revendication 6, caractérisée par le fait que sur le plateau (24) de l'organe d'arrêt (2) est montée sur le côté dirigé vers le mécanisme de déclenchement (3) une tige (23) qui est guidée dans la bague nervurée (21), et que la chaîne (4) est fixée à l'extrémité de cette tige (23) opposée au plateau (24).
